(19) Europäisches Patentamt
European Patent Office
Office européen des brevets

(11) **EP 4 117 854 B1**

(12) **EUROPÄISCHE PATENTSCHRIFT**

(45) Veröffentlichungstag und Bekanntmachung des Hinweises auf die Patenterteilung:
**14.08.2024 Patentblatt 2024/33**

(21) Anmeldenummer: **21707665.2**

(22) Anmeldetag: **22.02.2021**

(51) Internationale Patentklassifikation (IPC):
**B23P 15/10** (2006.01)   **F02B 9/08** (2006.01)
**F02B 11/00** (2006.01)   **F02B 23/06** (2006.01)
**F02F 3/12** (2006.01)   **F02F 3/24** (2006.01)
**F02F 3/26** (2006.01)   **F02F 3/28** (2006.01)
**F02F 3/04** (2006.01)

(52) Gemeinsame Patentklassifikation (CPC):
**F02B 9/06; F02B 11/00; F02B 23/0651;
F02B 23/0678; F02F 3/26; F02F 3/285;** Y02T 10/12

(86) Internationale Anmeldenummer:
**PCT/EP2021/054286**

(87) Internationale Veröffentlichungsnummer:
**WO 2021/180453 (16.09.2021 Gazette 2021/37)**

(54) **HUBKOLBEN-BRENNKRAFTMASCHINE**

STROKE PISTON INTERNAL COMBUSTION ENGINE

MACHINE À COMBUSTION INTERNE À PISTON MOUVANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2020 DE 102020001638**

(43) Veröffentlichungstag der Anmeldung:
**18.01.2023 Patentblatt 2023/03**

(73) Patentinhaber: **MAN Truck & Bus SE
80995 München (DE)**

(72) Erfinder: **CYPRIS, Jochen
80995 München (DE)**

(74) Vertreter: **v. Bezold & Partner Patentanwälte -
PartG mbB
Ridlerstraße 57
80339 München (DE)**

(56) Entgegenhaltungen:
**EP-A1- 3 351 779        EP-A2- 0 147 149
EP-B1- 0 147 149        EP-B1- 3 351 779
FR-A1- 2 291 361        GB-A- 2 254 372
JP-A- H 084 534        JP-A- H0 988 609
US-A1- 2006 081 212**

**Beschreibung**

Die Erfindung betrifft eine Hubkolben-Brennkraftmaschine und ein Kraftfahrzeug, beispielsweise ein Nutzfahrzeug, mit einer solchen Hubkolben-Brennkraftmaschine.

Aus dem Stand der Technik sind Hubkolben-Brennkraftmaschinen hinlänglich bekannt. Bei den in der Praxis üblichen Ausführungen unterscheidet man zwischen selbst- und fremdgezündeten Motoren. In beiden Fällen entstehen während der Verbrennung als Nebenprodukt Schadstoffe, nämlich:

a) Stickoxide, durch lokal hohe Verbrennungstemperaturen

Und bei kohlenwasserstoffbasierten Kraftstoffen:

b) Ruß, durch lokalen Sauerstoffmangel und hohe Temperaturen

c) Kohlenmonoxid, durch lokalen Sauerstoffmangel oder zu niedrige Temperaturen

d) Kohlenwasserstoffe, durch lokalen Sauerstoffmangel oder zu niedrige Temperaturen

Aus Gründen des Umweltschutzes ist eine kostenaufwändige katalytische Reinigung der Verbrennungsgase oder eine Abtrennung der Verbrennungsrückstände aus dem Abgasstrom erforderlich.

Zur Adressierung dieser Probleme sind aus dem Stand der Technik alternativ Brennverfahren bekannt, die unter dem Stichwort "homogene Verbrennung" zum Ziel haben, die Partikelrohemissionen praktisch gegen Null zu senken und den Zielkonflikt zwischen Partikel- und NOx-Emissionen zukünftig zu lösen. Die "homogene Verbrennung" (engl. Homogeneous Charge Compression Ignition, HCCI) steht somit für eine neue Art der motorischen Verbrennung, die zum Ziel hat, eines Tages auch ohne Abgasnachbehandlung den Verbrennungsmotor nahezu frei von Partikel- und NOx-Emissionen arbeiten zu lassen. Während das konventionelle Dieselbrennverfahren ein inhomogenes Gemisch bildet, das auch entsprechend uneinheitlich und mit lokalen Temperaturspitzen verbrennt, zielt HCCI auf eine möglichst homogene Gemischbildung und Verbrennung. Die homogene und magere Durchmischung von Luft und Kraftstoff vermeidet die fetten Gemischzonen, die die Partikelbildung fördern. Die volumetrische Verbrennung ohne Flammenfrontausbildung senkt durch hohen Inertgasanteil die lokalen Spitzentemperaturen während der Verbrennung. In der Folge wird die thermische NOx-Bildung vermieden, welche für den Großteil der NOx-Emissionen ursächlich ist. Der Luftüberschuss und die sehr schnelle Verbrennung verringern zusätzlich den spezifischen Kraftstoffverbrauch (vgl. "Nutzfahrzeugtechnik: Grundlagen, Systeme, Komponenten" (ATZ/MTZ-Fachbuch), von Erich Hoepke, Stefan Breuer, et al., Ausgabe August 2012).

In der Praxis sind bei HCCI ein erhöhter Kraftstoffeintrag ins Öl und erhöhte Emissionen von CO und HC festzustellen. Des Weiteren ist die Kontrolle des Zündzeitpunkts in der Praxis sehr aufwendig und sensibel auf Abgasrückführraten. In der Folge sind die Ansätze der homogenen Dieselverbrennung nur für die unteren und mittleren Teillastbereiche geeignet. Wegen dieser Schwierigkeiten und der gesteigerten Leistungsfähigkeit der Abgasnachbehandlung konnten sich HCCI-Ansätze entsprechend in der Praxis nicht durchsetzen.

Die JP H08 4534 A offenbart eine Brennkammer, bei der aus einer Einspritzdüse eingespritzter Kraftstoff auf vorstehende Teile trifft, sodass die Mischungseigenschaften des eingespritzten Kraftstoffs und der Luft verbessert werden. Die vorstehenden Teile sind an der Unterseite einer die Einspritzdüse umgebenden Öffnung vorgesehen, und ragen in den Strömungsweg des aus der Einspritzdüse eingespritzten Kraftstoffstrahls.

Die US 2006/0081212 A1 zeigt eine Brennkammer eines Verbrennungsmotors, in die ein Hindernis eingesetzt wird, um Turbulenzen zu erzeugen und rußreiche Zonen innerhalb einer direkt eingespritzten, brennenden kraftstoffmenge aufzubrechen oder zu unterbrechen. Dazu wird ein Ring in die Brennkammer eingebracht, der den eingespritzten Kraftstoffstrahl unterbricht oder beeinflusst.

Die JP H09 88609 A offenbart eine Vorrichtung, um einen eingespritzten Kraftstoffstrahl gleichmäßig in einer Brennkammer eines Verbrennungsmotors zu verteilen. Dazu wird ein zylinderförmiges Gitter derart am Zylinderkopf fixiert, dass das Gitter die Einspritzdüse umgibt. Eine scheibenförmige Kollisionsplatte ist derart in der Brennkammer angeordnet, dass die untere Öffnung der Gitteranordnung abgedichtet wird.

Die EP 0 147 149 A2 zeigt einen Kolben zur Verwendung in Zylindern von Verbrennungsmotoren mit Fremd- oder Selbstzündung. Eine Reihe von unterbrochenen Rippen, die entlang von Bögen mit zunehmendem Radius ausgerichtet sind, ragen über die Oberfläche des Kolbenbodens hinaus, um Turbulenzen der unverbrannten Ladung zu fördern, während sich die Flamme ausbreitet.

Die GB 2 254 372 A offenbart eine Ausgestaltung eines Kolbenbodens einer fremdgezündeten Brennkraftmaschine. Der Außenumfang des Kolbenbodens ist mit vorstehenden Wärmetauscherlamellen versehen, um die Wärmeübertragungsfläche zwischen den Endgasen und dem Kolben zu vergrößern, wobei die Zwischenräume zwischen den Lamellen ausreichend groß sind, damit sich die Verbrennungsflamme zwischen den Lamellen ausbreiten kann, ohne abgeschwächt zu werden.

Die FR 2 291 361 A1 betrifft eine ventilgesteuerte Verbrennungskraftmaschine der Einzylinder- oder Mehrzylinderbauart mit Kraftstoffeinspritzung. In jedem Zylinder gleitet ein mit Kolbenringen und Ölabstreifringen versehener Kolben, der an seiner Stirnfläche eine Aussparung aufweist. Sinn der Aussparungen in der Kolbenfläche ist es, den Schichtladungsbetrieb bei Verbrennungskraftmaschinen zu ermöglichen.

Die EP 3 351 779 A1 zeigt eine Steuervorrichtung für einen Verbrennungsmotor mit einem Kraftstoffeinspritzventil und einem Aktuator. Das Kraftstoffeinspritzventil spritzt Kraftstoff direkt in einen Brennraum ein. Der Aktuator ist so konfiguriert, dass er die Sauerstoffkonzentration im Ansauggas ändert, das dem Brennraum der Brennkraftmaschine zugeführt wird.

Aus den Offenlegungsschriften DE 101 35 062 A1 und DE 197 53 407 A1 sind ferner Ansätze bekannt, bei denen ein poröses Medium in einen Brennraum eingebracht ist. Das poröse Medium bildet einen porösen Reaktor (Porenbrenner) und ermöglicht auf diese Weise prinzipiell eine schadstofffreie Verbrennung, indem ein homogenes Temperaturfeld geschaffen wird - durchweg unterhalb der Bildungstemperatur für Stickoxide ($NO_x$) und durchweg ausreichend hoch für die vollständige Oxidation von HC und CO. Nachteilig an diesem Ansatz ist jedoch, dass die Montage einer porösen Struktur innerhalb des Brennraums technisch nicht gelöst ist und bei bisherigen Ansätzen Spannungsbrüche zu Bruchstücken führten, die eine mechanische Beschädigung der Kolben-Zylinder-Einheit zur Folge haben.

Es ist eine daher eine Aufgabe der Erfindung, einen verbesserten Ansatz bereitzustellen, mit dem Nachteile herkömmlicher Ansätze vermieden werden können. Die Aufgabe der Erfindung ist es insbesondere, eine Hubkolben-Brennkraftmaschine bereitzustellen, die bei der Verbrennung weniger Schadstoffe erzeugt und vorzugsweise zusätzlich eine CO2-Reduzierung ermöglicht.

Diese Aufgaben werden durch eine Hubkolben-Brennkraftmaschine mit den Merkmalen des unabhängigen Anspruchs 1 gelöst. Vorteilhafte Ausführungsformen und Anwendungen der Erfindung sind Gegenstand der abhängigen Ansprüche 2-15 und werden in der folgenden Beschreibung unter teilweiser Bezugnahme auf die Figuren näher erläutert.

Im Rahmen der Erfindung wurde festgestellt, dass, wenn anstelle eines porösen Materials eine stiftartige Struktur in den Brennraum eingebracht wird und die Verbrennung innerhalb und/oder im Bereich dieser stiftartigen Struktur abläuft, ebenfalls der Vorteil einer signifikanten Reduzierung bis zur Vermeidung der Entstehung von Schadstoffen beim Verbrennungsprozess erzielt werden kann. Darüber hinaus eignet sich eine derartige stiftartige Struktur wesentlich besser für den Praxis-Einsatz bei Hubkolben-Brennkraftmaschinen. Entsprechend wird gemäß einem allgemeinen Gesichtspunkt der Erfindung eine Hubkolben-Brennkraftmaschine bereitgestellt, umfassend zumindest einen Zylinder, in dem ein Hubkolben hin- und herbewegbar angeordnet ist. Jeder Zylinder weist einen durch die Bewegung des Kolbens verdichtbaren Brennraum auf. Die Hubkolben-Brennkraftmaschine zeichnet sich dadurch aus, dass brennraumseitig im Bereich des Zylinderkopfes und/oder des Kolbenbodens eine Stiftstruktur angeordnet bzw. vorgesehen ist.

Die erfindungsgemäße Stiftstruktur bietet den besonderen Vorzug, dass dieselben Effekte wie bei der homogenen Verbrennung erzielt werden können, d. h., die Entstehung von Schadstoffen beim Verbrennungsprozess kann weitestgehend vermieden werden. Die stiftartige Struktur ermöglicht im Vergleich zu herkömmlichen Ausführungen von Brennräumen von Brennkraftmaschinen die Entstehung eines homogenen Temperaturfelds - durchweg unterhalb der Bildungstemperatur von Stickoxiden und durchweg ausreichend hoch für die vollständige Oxidation von HC und CO. Die stiftartige Struktur vermeidet ferner die Nachteile eines Porenbrenners, da die stiftartige Struktur entsprechend stabil ausgeführt sein kann, so dass diese für den Praxiseinsatz in Verbrennungsmotoren geeignet ist. Die erfindungsgemäße Bereitstellung einer stiftartigen Struktur im Brennraum einer Brennkraftmaschine ermöglicht somit eine vorteilhafte Annäherung an das Prinzip der homogenen Verbrennung. Auch wenn damit keine perfekte homogene Verbrennung erzielbar ist, wird durch die stiftartige Struktur jedoch ein weitgehend homogenes Temperaturfeld ermöglicht, so dass im Wesentlichen die gleichen Effekte und Vorteile wie bei der homogenen Verbrennung erzielt werden können. Durch eine späte Einspritzstrategie bleibt die Kontrolle des Zündzeitpunkts erhalten und die heiße Stiftstruktur fördert eine schnelle Gemischbildung. Die Verbrennung findet dann bevorzugt vollständig innerhalb des mit Stiften versehenen Brennraums statt, so dass durch diese besondere Gestaltung des Brennraums die Schadstoffbildung während der Verbrennung vermieden oder zumindest stark reduziert werden kann. Für den Arbeitsprozess strömt kontinuierlich heißes Gas aus dem Brennraum aus.

Unter einer Stiftstruktur wird eine stiftartige Struktur verstanden, die mehrere bzw. eine Vielzahl Stifte aufweist, und/oder eine Vorrichtung, die durch mehrere Stifte ausgebildet ist.

Der Begriff "Stift" kann sämtliche schlanke Gebilde umfassen, deren Längsausdehnung größer ist als deren Durchmesser an der dünnsten Stelle. Bei nicht elliptischen Querschnitten ist die Höhe größer als die dünnste Wandstärke.

Die Stiftstruktur umfasst insbesondere Stifte, deren Längsausdehnung länger als deren Durchmesser ist. Die Stifte der Stiftstruktur können zylinderförmig und/oder bolzenförmig ausgeführt sein, d. h. einen kreisförmigen Querschnitt aufweisen in Bezug auf eine Schnittebene, die senkrecht zur Bewegungsrichtung des Kolbens ist. Alternativ oder zusätzlich können die Stifte jedoch auch einen rechteckförmigen, einen sichelförmigen, einen sternförmigen und/oder einen anderen Querschnitt in dieser Schnittebene aufweisen.

Die Stifte der Stiftstruktur können sich optional parallel oder im Wesentlichen parallel zur Bewegungsrichtung des Kolbens erstrecken. Die Stiftstruktur kann ausgebildet sein, über ihre Oberfläche eine wärmespeichernde und/oder temperaturausgleichende Wirkung während einer Verbrennung im Brennraum auszubilden. Ferner kann die Stiftstruktur eine Stiftstruktur zur Homogenisierung einer Gemischbildung und/oder einer Verbrennung oder zumindest zur Förderung einer homogeneren Gemischbildung und/oder einer Verbrennung im Brennraum sein. Unter einer Homogenisierung der Gemischbildung oder der Verbrennung wird vorliegend keine perfekte oder ideale Homogenisierung verstanden. Vielmehr führt die Stiftstruktur zu einer homogeneren Gemischbildung oder Verbrennung im Vergleich zu herkömmlichen Brennräumen ohne Stiftstruktur, so dass die Vorteile und positiven Effekte einer idealen Homogenisierung, wie die Reduzierung von NOx, hierdurch zumindest angenähert werden können.

Die Stifte haben durch ihre Oberfläche eine temperaturausgleichende Wirkung. Heißbereiche, sog. Hotspots, werden abgekühlt, und Temperatursenken werden aufgeheizt. Dieses Verhalten wirkt sich auf die Bildungsmechanismen einzelner Schadstoffkomponenten aus. Die Bildungstemperatur von thermischen Stickoxiden wird auch lokal nicht überschritten. Temperatursenken - ursächlich für CO und HC Emissionen - werden somit vermieden. Das Verfahren ist prinzipiell für jeden Kraftstoff geeignet, der sich bei später Einspritzstrategie in ausreichender Menge dem System zuführen lässt.

Die Stiftstruktur ist so angeordnet, dass sie sich im Verdichtungsraum des Brennraums befindet, wenn der Kolben sich im oberen Totpunkt (nachfolgend kurz mit OT bezeichnet) befindet, d. h. in OT-Stellung ist. Anders ausgedrückt ist die Stiftstruktur in einem Bereich des Brennraums angeordnet, in dem eine Verbrennung des komprimierten Luft-Brennstoffgemisches stattfindet. Mit anderen Worten ist die Stiftstruktur zumindest zum Zeitpunkt, wenn der Kolben sich im OT befindet, bevorzugt im und/oder innerhalb des Verdichtungsraums des Brennraums angeordnet.

In einer besonders bevorzugten Ausführungsform füllt die Stiftstruktur einen Volumenanteil im Bereich von 5 % bis 40 % des Brennraums aus, wenn der Hubkolben sich im OT befindet. Anders ausgedrückt füllt die Stiftstruktur einen Volumenanteil im Bereich von 5 % bis 40 % des Verdichtungsraums aus. Dies bedeutet entsprechend, dass in dieser Ausführungsform 60 % bis 95 % Volumenanteil des Verdichtungsraums vom Verbrennungsgemisch oder Luft ausgefüllt wird.

Besonders vorteilhaft ist eine Variante dieser Ausführungsform, bei der die Stiftstruktur einen Volumenanteil im Bereich von 10 % bis 20 % des Brennraums ausfüllt, wenn der Hubkolben sich im OT befindet. Anders ausgedrückt füllt die Stiftstruktur gemäß dieser Variante einen Volumenanteil im Bereich von 10 % bis 20 % des Verdichtungsraums aus. Dies bedeutet entsprechend, dass in dieser Variante 80 % bis 90 % Volumenanteil des Verdichtungsraums von Verbrennungsgemisch oder Luft ausgefüllt wird. Im Rahmen der Erfindung wurde festgestellt, dass diese Bereiche besonders vorteilhaft sind, um eine Homogenisierung der Gemischbildung und/oder der Verbrennung im Brennraum zu erzielen oder zumindest anzunähern.

Vorstehend wurde festgestellt, dass die Stiftstruktur brennraumseitig im Bereich des Kolbenbodens angeordnet sein kann. In einer besonders bevorzugten Ausführungsvariante hiervon ist die Stiftstruktur in einer Mulde des Kolbenbodens angeordnet. Die ermöglicht eine besonders kompakte Ausführung der Zylinder-Kolben-Anordnung. Der Kolben ist hierbei als Muldenkolben ausgeführt. Alternativ oder zusätzlich kann sich die Stiftstruktur stalagmitartig in Richtung Brennraum erstrecken, d. h. sich ausgehend vom Kolbenboden hin zum Zylinderkopf stiftförmig, z. B. stabartig, säulenartig oder konusförmig in den Brennraum erstrecken.

Vorstehend wurde ferner festgestellt, dass die Stiftstruktur brennraumseitig im Bereich des Zylinderkopfes angeordnet sein kann. In einer besonders bevorzugten Ausführungsvariante hiervon ist die Stiftstruktur in einer Ausnehmung des Zylinderkopfes angeordnet. Alternativ kann die Stiftstruktur jedoch auch unterhalb des Zylinderkopfes angeordnet sein. Der Begriff "unterhalb" bezieht sich auf eine normale Einbaulage des Motors, d. h., der Zylinderkopf befindet sich in Bezug auf die Gravitationsrichtung oberhalb des Kolbens und des Zylindermantels. Alternativ oder zusätzlich kann sich die Stiftstruktur stalaktitartig vom Zylinderkopf in Richtung Brennraum erstrecken, d. h. ausgehend von einem Bereich im oder unterhalb des Zylinderkopfs sich hin zum Brennraum stiftförmig, z. B. stabartig, säulenartig oder konusförmig in den Brennraum erstrecken.

Gemäß einer weiteren Ausführungsform kann die Stiftstruktur mindestens 10 Stifte umfassen. Weiter vorzugsweise ist ferner denkbar, dass die Stiftstruktur mindestens 20 oder mindestens 30 Stifte oder mindestens 40 Stifte umfasst Die Stiftanzahl kann für eine bestimmte Hubkolben-Brennkraftmaschine unter Berücksichtigung folgender Überlegungen zweckmäßig festgelegt werden. Einerseits beeinflusst in der Praxis der Brennraumdurchmesser bzw. die Maschinengröße die Stiftanzahl. Ferner ist zu beachten, dass einerseits ein möglichst kleiner Stiftdurchmesser wünschenswert ist. Denn je kleiner der Stiftdurchmesser, desto höher die Stiftanzahl und damit desto größer die Oberfläche der Stiftstruktur für die wärmespeichernde und/oder temperaturausgleichende Wirkung. Andererseits dürfen die Stiftdurchmesser nicht so klein gewählt werden, dass dadurch die Stabilität der Stiftstruktur im Betrieb der Hubkolben-Brennkraftmaschine gefährdet ist. Die Stiftanzahl kann durch geeignete Versuche festgelegt und optimiert werden.

Alternativ oder zusätzlich können die mehreren Stifte der Stiftstruktur beabstandet zueinander sein, vorzugsweise derart, dass die Stifte ohne Verbindung zueinander im Brennraum angeordnet sind. Dadurch wird vermieden, dass sich die Stifte verspannen und brechen.

Die Hubkolben-Brennkraftmaschine weist einen im Bereich der Stiftstruktur angeordneten Prallstift zur Ablenkung und/oder zur Verteilung von eingebrachtem Brennstoff hin zur Stiftstruktur auf. Dies ermöglicht das Einbringen von Brennstoff in einem spitzeren Einbringwinkel, z. B. in einem spitzeren Einspritzwinkel bei flüssigem Kraftstoff oder einem spitzere Eindüswinkel bei gasförmigem Kraftstoff, als sonst üblich. Hierbei wird der Kraftstoff so eingebracht, dass er zumindest teilweise auf den Prallstift trifft und von dort hin zur Stiftstruktur abgelenkt wird. Dies ermöglicht eine besonders effiziente Kraftstoffverteilung im Brennraum und vermeidet das Eindringen von Kraftstoff in den Ringspalt zwischen Kolben und Laufbuchse. Es ist hierbei vorgesehen, dass der Prallstift derart in Bezug auf eine Einbringrichtung des Brennstoffes in den Brennraum und die Stiftstruktur angeordnet und ausgebildet ist, dass eingebrachter Brennstoff zumindest überwiegend auf den Prallstift prallt und von diesem in radialer Richtung hin zur Stiftstruktur abgelenkt und/oder verteilt wird. Beispielsweise kann der Prallstift in einem mittleren Bereich der Stiftstruktur angeordnet sein. Alternativ oder zusätzlich kann der Prallstift eine geringere Höhe in Bezug auf die Bewegungsrichtung des Kolbens als die Stiftstruktur aufweisen.

Die Stiftstruktur kann aus einem metallischen Werkstoff gebildet sein, was eine vorteilhafte Herstellung ermöglicht. Ferner kann die Stiftstruktur aus einem Keramikwerkstoff gebildet sein, was aus thermischen Gesichtspunkten besonders vorteilhaft ist. Denkbar ist auch, dass die Stiftstruktur aus einem Verbundwerkstoff hergestellt ist, vorzugsweise aus einem metallischen Werkstoff und einem Keramikwerkstoff.

In einer weiteren Ausführungsform ist die Hubkolben-Brennkraftmaschine ausgebildet, einen für einen Verbrennungsvorgang erforderlichen Brennstoff dem Brennraum unter Druck in lediglich einem Einspritzvorgang kurz vor oder bei Erreichung des OT zuzuführen. Verallgemeinert ausgedrückt kann es sich um einen luftverdichtenden Motor mit später direkter Kraftstoffzufuhr, d. h. in OT-Nähe, handeln.

In einer hierzu alternativen Ausführungsform kann die Hubkolben-Brennkraftmaschine ausgebildet sein, eine teilhomogene Verbrennung durch Aufteilung der Gemischbildung zu ermöglichen. Hierbei kann die Hubkolben-Brennkraftmaschine ausgebildet sein, a) eine Teilmenge eines für einen Verbrennungsvorgang erforderlichen Brennstoffes dem Brennraum zur Bildung eines mageren, zündunfähigen Gemisches zuzuführen, b) nachfolgend das magere, zündunfähige Gemisch durch eine Kolbenbewegung hin zum OT zu komprimieren und c) anschließend eine Restmenge des für einen Verbrennungsvorgang erforderlichen Brennstoffes im Bereich des OT zur Initiierung der Selbst- oder Fremdzündung zuzuführen. Diese alternative Ausführungsform, d. h. die Verdichtung eines mageren (zündunfähigen Gemisches) mit anschließender Selbstzündung bzw. Fremdzündung durch späte direkte Kraftstoffzufuhr, ermöglicht eine teilhomogenisierte Verbrennung mit Vorteilen hinsichtlich der Schadstoffbildung ohne den Nachteil zu hoher Druckgradienten durch die dämpfende Wirkung der stiftförmigen Struktur.

Hervorzuheben ist ferner, dass der erfindungsgemäße Ansatz, eine Stiftstruktur zur Förderung der Homogenisierung der Gemischbildung und einer Verbrennung im Brennraum vorzusehen, nicht auf eine bestimmte Brennkraftmaschine beschränkt ist. Entsprechend kann die Brennkraftmaschine eine mit gasförmigem oder mit flüssigem Kraftstoff, beispielsweise eine mit Dieselkraftstoff oder Benzin, betriebene Brennkraftmaschine sein. Die Brennkraftmaschine gemäß einer besonders hervorgehobenen Ausführungsform ist eine Hubkolben-Brennkraftmaschine, wie vorstehend beschrieben wurde.

Allerdings ist die Erfindung grundsätzlich auf jede Brennkraftmaschine, bei der ein Arbeitsgas verdichtet, Wärme durch Verbrennung eines beigemischten Brennstoffs freigesetzt und eine infolge der Verbrennung erzeugte Volumenexpansion zur Gewinnung mechanischer Arbeit genutzt wird, anwendbar. Gemäß einem weiteren allgemeinen Gesichtspunkt wird somit eine Vorrichtung zur Umwandlung von Wärme in Arbeit bereitgestellt, wobei ein gasförmiges oder flüssiges Brennmittel einem verdichtbaren Arbeitsgases beigemischt und nachfolgend verbrennbar ist und wobei die bei der Verbrennung erzeugte Volumenexpansion in mechanische Arbeit umsetzbar ist und wobei im Brennraum der Vorrichtung eine stiftartige Struktur angeordnet ist, derart, dass die Verbrennung innerhalb oder überwiegend innerhalb der stiftartigen Struktur stattfindet. Die stiftartige Struktur kann Merkmale der vorstehend beschriebenen optionalen Ausführungsformen aufweisen, wie z. B. betreffend die Anzahl der Stifte, der Volumenanteil der Stiftstruktur in Relation zur Luftmenge im Brennraum etc.

Die Erfindung betrifft ferner ein Kraftfahrzeug mit einer Vorrichtung zur Umwandlung von Wärme in Arbeit, vorzugsweise einer Hubkolben-Brennkraftmaschine, aufweisend die Stiftstruktur wie in diesem Dokument beschrieben. Vorzugsweise handelt es sich bei dem Kraftfahrzeug um ein Nutzfahrzeug. Mit anderen Worten kann es sich bei dem Kraftfahrzeug um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen, einen Omnibus und oder einen Sattelzug handeln.

Die Erfindung betrifft ferner eine Maschine oder eine stationäre Anwendung, z. B. ein Blockheizkraftwerk, umfassend eine Hubkolben-Brennkraftmaschine, aufweisend die Stiftstruktur wie in diesem Dokument beschrieben. Die Erfindung betrifft ferner Fahrzeuge aller Art, umfassend eine Hubkolben-Brennkraftmaschine, aufweisend die Stiftstruktur wie in diesem Dokument beschrieben. Das Fahrzeug kann ein Wasserfahrzeug, z. B. ein Schiff, oder ein Luftfahrzeug, z. B. ein Flugzeug, sein.

Die vorstehend verwendeten Begriffe "Verbrennungsraum" und "Verdichtungsraum" eines Zylinders werden in üblicher Weise wie folgt verstanden:

Der Verbrennungsraum (Vb) ist das von Zylinder, Kolben und Zylinderkopf eingeschlossene Volumen. Er ist von der Stellung des Kolbens abhängig, im Betrieb also zeitabhängig. Mit dem Verdichtungsraum ($Vb\_min = Vc$) ist der kleinste mögliche Raum gemeint, wenn der Kolben auf OT steht. Befindet sich der Kolben im unteren Totpunkt (UT), dann gilt:

$$Vb = Vh + Vc,$$

wobei Vh der Zylinderhubraum und Vc der Verdichtungsraum ist.

Der Hubraum Vh, auch als Hubvolumen bezeichnet, bezeichnet bekanntermaßen für die Zylinder von Kolbenmaschinen das umschlossene Volumen, das sich aus dem Arbeitsweg des einzelnen Kolbenhubes und der wirksamen Kolbenquerschnittsfläche ergibt. Er definiert also das Volumen, das bei einem Motor durch den Hub aller Kolben insgesamt verdrängt wird.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1  eine stark schematisierte Querschnittsansicht einer Hubkolben-Brennkraftmaschine gemäß einer Ausführungsform der Erfindung;

Figur 2  einen Kolben mit einer Stiftstruktur gemäß einer Ausführungsform der Erfindung;

Figur 3  eine Draufsicht auf einen Muldenkolben mit Stiftstruktur gemäß einer Ausführungsform der Erfindung;

Figur 4 bis Figur 6  eine Illustration eines Verbrennungsvorgangs mit einer HubkolbenBrennkraftmaschine gemäß einer Ausführungsform der Erfindung; und

Figur 7  eine Draufsicht auf einen Muldenkolben mit einer alternativen Stiftstruktur gemäß einer weiteren Ausführungsform der Erfindung.

Gleiche oder äquivalente Elemente sind in allen Figuren mit denselben Bezugszeichen bezeichnet und zum Teil nicht gesondert beschrieben.

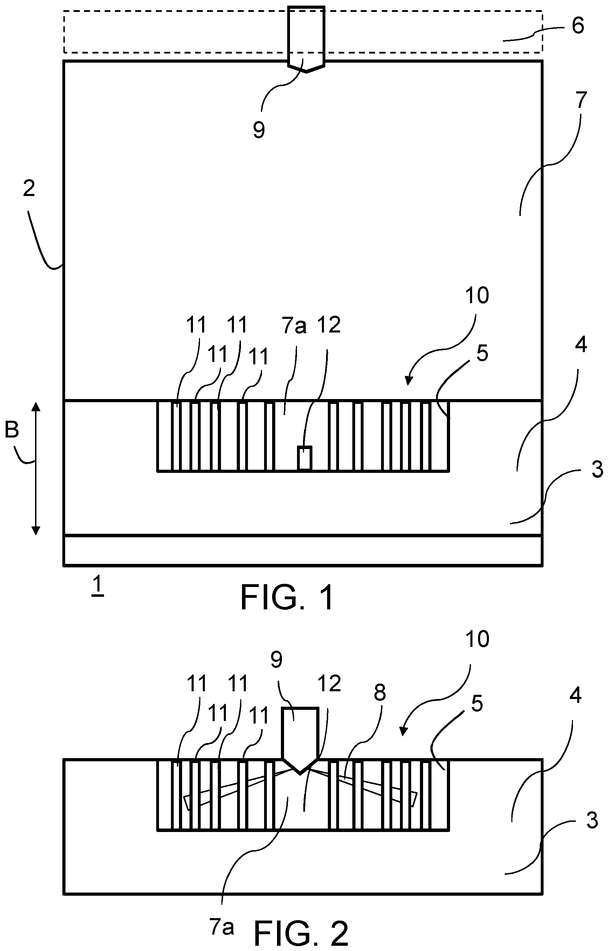

Figur 1 zeigt eine stark schematisierte Querschnittsansicht einer Hubkolben-Brennkraftmaschine gemäß einer Ausführungsform der Erfindung. Von der Hubkolben-Brennkraftmaschine 1 ist zur Vereinfachung der Darstellung nur einer von mehreren Zylindern 2 dargestellt, in dem ein Hubkolben 3 hin- und herbewegbar angeordnet ist. Im vorliegenden Beispiel ist die Hubkolben-Brennkraftmaschine 1 lediglich beispielhaft eine Dieselbrennkraftmaschine, wobei die Erfindung hierauf nicht beschränkt ist, wie vorstehend bereits festgestellt wurde.

Der Hubkolben 3 ist als Muldenkolben ausgeführt. In einer Mulde 5 des Kolbenbodens 4 ist eine Stiftstruktur 10 angeordnet, die zu einer homogeneren Gemischbildung oder Verbrennung - im Vergleich zu herkömmlichen Brennräumen ohne Stiftstruktur - führt, so dass die Vorteile und positiven Effekte einer idealen Homogenisierung, wie die Reduzierung von NOx, hierdurch zumindest angenähert werden können.

Die Stiftstruktur 10 weist eine Vielzahl von Stiften 11 auf. Die Stifte haben durch ihre Oberfläche eine temperaturausgleichende Wirkung. Hotspots werden abgekühlt, und Temperatursenken werden durch die Stifte 11 aufgeheizt. Dieses Verhalten wirkt sich auf die Bildungsmechanismen einzelner Schadstoffkomponenten aus. Die Bildungstemperatur von thermischen Stickoxiden wird auch lokal nicht überschritten, Temperatursenken - ursächlich für CO- und HC-Emissionen - werden vermieden. Das Verfahren ist prinzipiell für jeden Kraftstoff geeignet, der sich bei später Einspritzstrategie in ausreichender Menge dem System zuführen lässt.

Die bolzenförmigen Stifte 11 aus einem metallischen Werkstoff sind hierbei beabstandet zueinander im Kolbenboden 4 befestigt und ohne Verbindung zueinander im Brennraum 7. Die Stifte 11 erstrecken sich parallel zueinander stalagmitartig in Richtung Brennraum 7 bzw. parallel zur Bewegungsrichtung B des Kolbens 3. Alternativ kann die Stiftstruktur auch brennraumseitig im Bereich des Zylinderkopfes angeordnet sein, wie vorstehend bereits beschrieben wurde. Der Zylinderkopf ist hier nur schematisch durch die gestrichelte Linie 6 angedeutet.

Wichtig ist, dass die Stiftstruktur 10 so im Brennraum angeordnet ist, dass die Verbrennung vollständig oder nahezu vollständig innerhalb des mit Stiften versehenen Brennraums stattfindet. Wenn der Kolben 3 sich in OT-Stellung befindet, ist die Mulde 5 des Kolbenbodens 4 Teil des Verdichtungsraum 7a des Brennraums 7, in dem eine Verbrennung des komprimierten Luft-Brennstoffgemisches stattfindet.

Figur 2 zeigt eine Querschnittsansicht eines Kolben 3 in einer OT-Stellung zum Zeitpunkt einer späten Kraftstoffeinspritzung. Der Zylinder 2 wurde hier nicht dargestellt, ist aber wie in Figur 1 dargestellt, ausgeführt.

Der Kraftstoff 8 wird hierbei von einer Einspritzdüse 9 unter hohem Druck kurz vor OT zugeführt. Es ist prinzipiell egal, um welchen Kraftstoff es sich dabei handelt. Vorliegend wird beispielhaft Dieselkraftstoff eingespritzt. Der Druck ist nötig, um die komplette Kraftstoffmenge in kurzer Zeit zuzuführen. Die Verbrennung findet dann vollständig innerhalb des mit Stiften versehenen Verdichtungsraums 7a statt. Für den Arbeitsprozess strömt kontinuierlich heißes Gas aus dem Brennraum aus. Aus der Verdichtung und dem Verbrennungsprozess wird Wärme in den Stiften 11 gespeichert. Die Wärmewechselwirkung findet hauptsächlich zwischen Luft bzw. Verbrennungsgas und den Stiften 11 bzw. der Stiftstruktur 10 statt. Wie vorstehend bereits ausgeführt wurde, werden durch Wärmewechselwirkung lokale Temperaturspitzen und -senken im Verbrennungsgas reduziert und damit die Schadstoffbildung verhindert oder zumindest vermindert.

Ein im Bereich der Stiftstruktur 10 angeordneter Prallstift 12 ist zur Ablenkung und/oder zur Verteilung von eingebrachtem Brennstoff 8 hin zur Stiftstruktur 10 vorgesehen. Der Prallstift 12 ist in einem mittleren Bereich der Stiftstruktur 10 angeordnet und in Bezug auf eine Einbringrichtung des Brennstoffes in den Brennraum und die Stiftstruktur 10 derart angeordnet und ausgebildet, dass eingebrachter Brennstoff 8 zumindest überwiegend auf den Prallstift prallt und von diesem in radialer Richtung hin zur Stiftstruktur 10 abgelenkt und/oder verteilt wird. Figur 1 zeigt eine Ausführungsform mit Prallstift 12. Dagegen zeigt Figur 2 einen Kolben 3 ohne Prallstift.

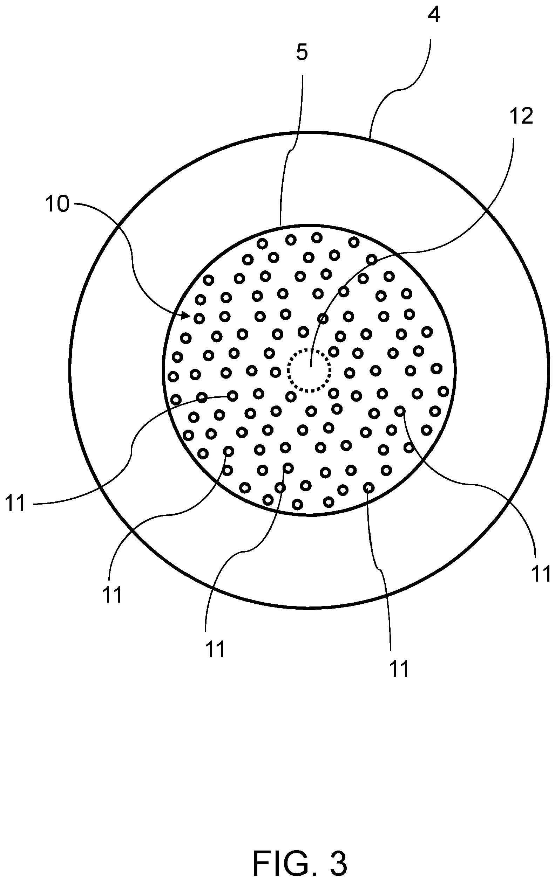

Figur 3 zeigt eine Draufsicht auf einem Muldenkolben 3 mit Stiftstruktur 10 der Figur 1. Es ist erkennbar, dass eine Vielzahl von Stiften 11 in der Mulde 5 des Kolbenbodens 4 im Wesentlichen gleichverteilt angeordnet ist. Dies stellt jedoch lediglich eine beispielhafte Ausführungsform dar.

Zur Herstellung der Stiftstruktur können Bohrungen in den Muldenkolben 3 eingebracht werden, in die die Stifte 11 zur Ausbildung der Stiftstruktur 10 dann eingepresst werden. Jedoch ist auch eine Herstellung des Muldenkolbens 3 mit integrierter Stiftstruktur 10 mittels eines 3D-Druckverfahrens möglich, z. B. mittels eines Laser- bzw. Bogenschweiß-3D-Druckverfahrens. Der Muldenkolben 3 mit integrierter Stiftstruktur 10 kann auch als Gussteil hergestellt sein.

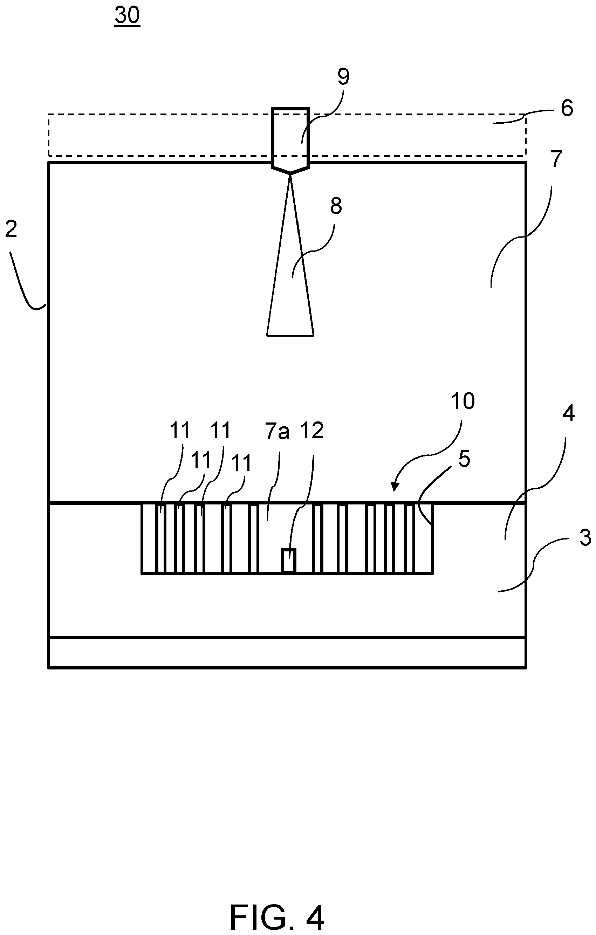

Die Figuren 4 bis 6 zeigen eine Illustration eines Verbrennungsvorgangs mit einer Hubkolben-Brennkraftmaschine gemäß einem Alternativverfahren mit gleichem Brennraumprinzip. Im Gegensatz zu dem in Figur 2 skizzierten verdichtenden Motor mit ausschließlich später direkter Kraftstoffzufuhr in OT-Nähe handelt es sich bei dem in den Figuren 4 bis 6 illustrierten Alternativverfahren um eine teilhomogene Verbrennung durch Aufteilung der Gemischbildung.

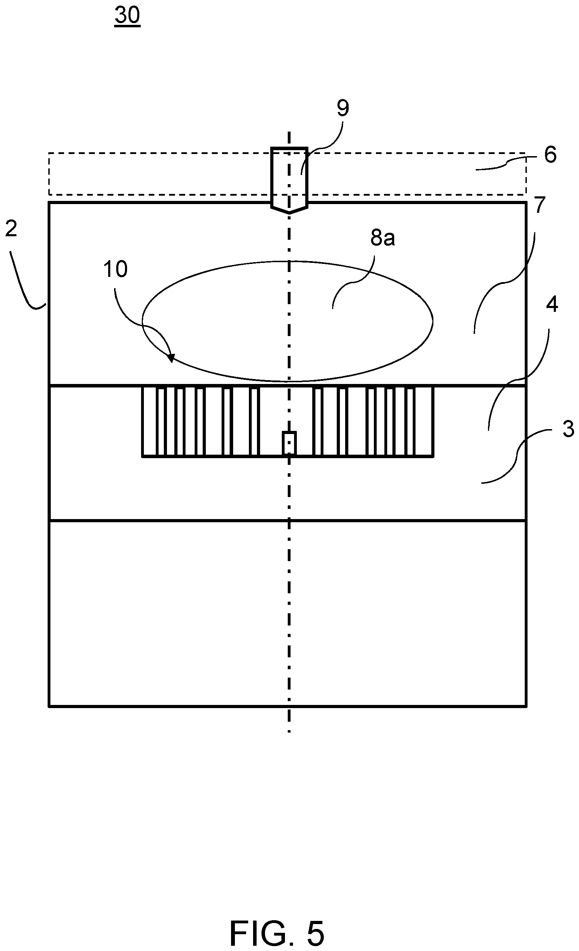

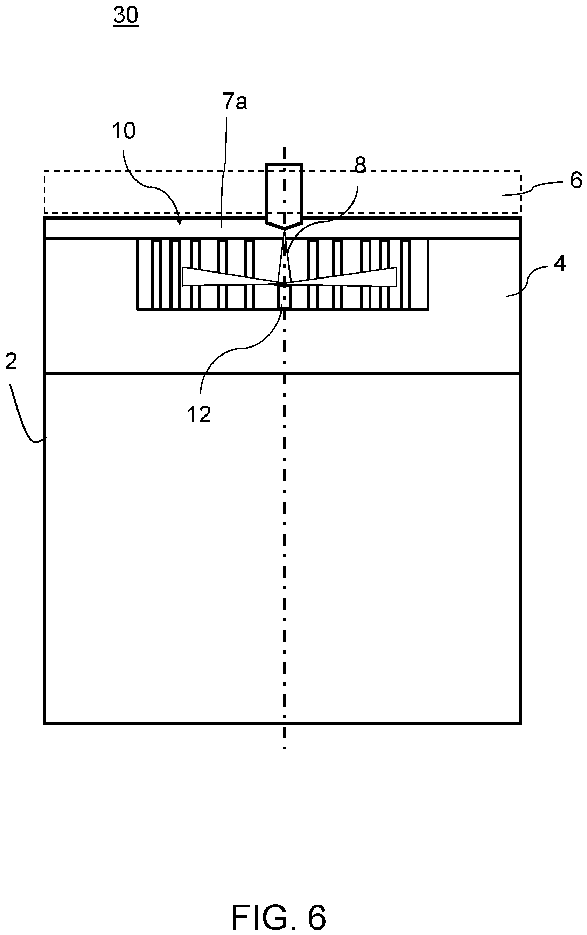

Hierbei ist die die Hubkolben-Brennkraftmaschine 30 ausgebildet, zunächst eine Teilmenge eines für einen Verbrennungsvorgang erforderlichen Brennstoffes dem Brennraum 7 zur Bildung eines mageren, zündunfähigen Gemisches zuzuführen. Dies ist in Figur 4 gezeigt. Der Kolben 4 mit der Stiftstruktur 10 befindet sich am unteren Totpunkt (UT) oder in UT-Nähe. Über die Einspritzdüse 9 erfolgt eine frühe direkte zentrische Kraftstoffzufuhr während "Einlass offen" der Ansaugventile (nicht dargestellt). Das Ziel hierbei ist die Erzeugung eines mageren Gemisches 8a in der Zylindermitte. Dies bietet den Vorteil, dass durch diese zentrische Kraftstoffzufuhr keine Kraftstoffverdichtung in den Ringspalt zwischen Laufbuchse und Kolben erfolgt. Wie in Figur 5 dargestellt ist, erfolgt nachfolgend eine Komprimierung des mageren, zündunfähigen Gemisches 8a durch eine Kolbenbewegung hin zum OT und anschließend eine Zuführung einer Restmenge des für einen Verbrennungsvorgang erforderlichen Brennstoffes im Bereich des OT zur Initiierung der Selbst- oder Fremdzündung, was in Figur 6 illustriert ist.

Hierbei wird der zentrische Einspritzstrahl 8 an dem Prallstift 12 radial abgelenkt und verteilt. Im Ergebnis entsteht eine teilhomogenisierte Verbrennung, die eine reduzierte Schadstoffbildung ermöglicht, ohne den Nachteil zu hoher Druckgradienten durch die dämpfende Wirkung der Stiftstruktur 10.

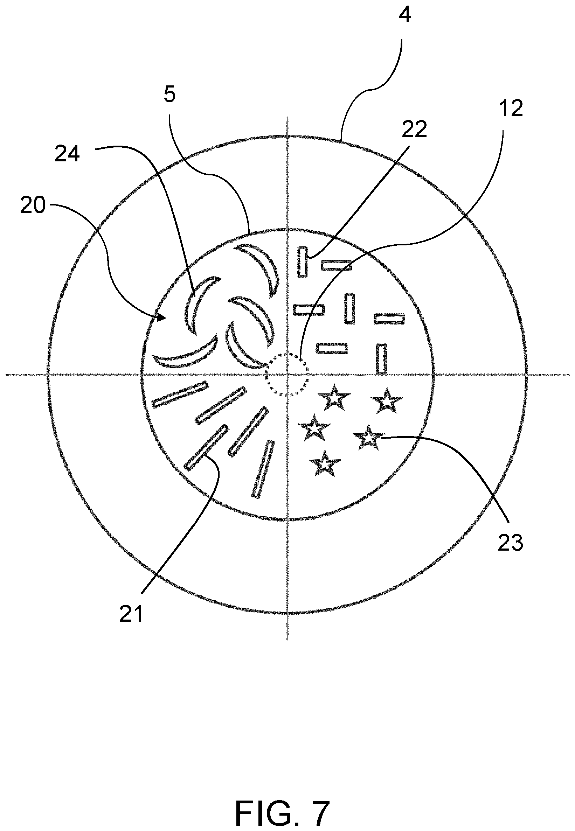

Figur 7 zeigt eine Draufsicht auf einen Muldenkolben 4 mit einer alternativen Stiftstruktur 20 gemäß einer weiteren Ausführungsform der Erfindung. Es ist erkennbar, dass eine Vielzahl von Stiften 21, 22, 23, 24 in der Mulde 5 des Kolbenbodens 4 angeordnet sind. Im Gegensatz zu der Ausführungsform der Figur 3 weisen die Stifte keinen kreisförmigen Querschnitt auf. Alternativ oder zusätzlich zu Stiften mit kreisförmigem Querschnitt kann die Stiftstruktur stattdessen Stifte mit anderen Querschnitten aufweisen, beispielsweise Stifte 21, 22 mit einem rechteckförmigen Querschnitt und/oder Stifte 24 mit einem sichelförmigen Querschnitt und/oder Stifte 23 mit einem sternförmigen Querschnitt und/oder Stifte mit einem anderen Querschnitt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste**

1 Hubkolben-Brennkraftmaschine
2 Zylinder
3 Hubkolben
4 Kolbenboden
5 Mulde
6 Zylinderkopf
7 Brennraum
7a Brennraumbereich
8 Brennstoff, z. B. eingespritzter Dieselkraftstoff
8a Mageres Gemisch
9 Einspritzdüse
10 Stiftstruktur
11 Stift der Stiftstruktur
12 Prallstift
20 Stiftstruktur
21 Stift der Stiftstruktur
22 Stift der Stiftstruktur
23 Stift der Stiftstruktur
24 Stift der Stiftstruktur
30 Hubkolben-Brennkraftmaschine
B Bewegungsrichtung Kolben

**Patentansprüche**

1. Hubkolben-Brennkraftmaschine (1; 30), umfassend zumindest einen Zylinder (2), in dem ein Hubkolben (3) hin- und herbewegbar angeordnet ist,

    wobei brennraumseitig im Bereich des Zylinderkopfes (6) und/oder des Kolbenbodens (4) eine Stiftstruktur (10) angeordnet ist,
    **dadurch gekennzeichnet, dass**
    die Hubkolben-Brennkraftmaschine (1; 30) einen im Bereich der Stiftstruktur (10) angeordneten Prallstift (12) zur Ablenkung und/oder zur Verteilung von eingebrachtem Brennstoff (8) hin zur Stiftstruktur (10) aufweist, wobei der Prallstift derart in Bezug auf eine Einbringrichtung des Brennstoffes in den Brennraum und die Stiftstruktur (10) angeordnet und ausgebildet ist, dass eingebrachter Brennstoff (8) zumindest überwiegend auf den Prallstift (12) prallt und von diesem in radialer Richtung hin zur Stiftstruktur (10) abgelenkt und/oder verteilt wird.

2. Hubkolben-Brennkraftmaschine nach Anspruch 1, wobei die Stiftstruktur (10)

    a) ausgebildet ist, über ihre Oberfläche eine wärmespeichernde und/oder temperaturausgleichende Wirkung während einer Verbrennung im Brennraum (7a) auszubilden; und/oder
    b) eine Stiftstruktur zur Homogenisierung einer Gemischbildung und/oder einer Verbrennung im Brennraum (7a) ist oder eine Stiftstruktur zur Förderung einer homogeneren Gemischbildung und/oder Verbrennung im Brennraum (7a) ist.

3. Hubkolben-Brennkraftmaschine nach einem der vorhergehenden Ansprüche, wobei die Stiftstruktur (10) einen Volumenanteil im Bereich von 5 % bis 40 %, weiter vorzugsweise im Bereich von 10 % bis 20 %, des Brennraums (7) ausfüllt, wenn der Hubkolben (3) sich im oberen Totpunkt, OT, befindet.

4. Hubkolben-Brennkraftmaschine nach einem der vorhergehenden Ansprüche, wobei die brennraumseitig im Bereich des Kolbenbodens (4) angeordnete Stiftstruktur (10) in einer Mulde (5) des Kolbenbodens (4) angeordnet ist und/oder sich stalagmitartig in Richtung Brennraum (7) erstreckt.

5. Hubkolben-Brennkraftmaschine nach einem der vorhergehenden Ansprüche, wobei die brennraumseitig im Bereich des Zylinderkopfes (6) angeordnete Stiftstruktur (10)

    a) im Zylinderkopf (6), vorzugsweise in einer Ausnehmung des Zylinderkopfes, angeordnet ist; und/oder
    b) unterhalb des Zylinderkopfes (6) angeordnet ist; und/oder

c) sich stalaktitartig vom Zylinderkopf (6) in Richtung Brennraum (7) erstreckt.

6. Hubkolben-Brennkraftmaschine nach einem der vorhergehenden Ansprüche, wobei die Stiftstruktur (10) mehrere Stifte (11) umfasst und/oder durch mehrere Stifte (11) ausgebildet ist.

7. Hubkolben-Brennkraftmaschine nach Anspruch 6, wobei

a) die Stiftstruktur (10) mindestens 10, weiter vorzugsweise mindestens 20 oder mindestens 30 Stifte (11), umfasst; und/oder
b) die mehreren Stifte (11) beabstandet zueinander und/oder ohne Verbindung zueinander im Brennraum (7) angeordnet sind.

8. Hubkolben-Brennkraftmaschine nach einem der Ansprüche 6 bis 7, wobei

a) eine Länge der Stifte (11) größer als ihr Durchmesser ist; und/oder
b) die Stifte (11) zylinderförmig und/oder bolzenförmig ausgeführt sind; und/oder
c) die Stifte (11) sich parallel oder im Wesentlichen parallel zur Bewegungsrichtung (b) des Kolbens (3) erstrecken.

9. Hubkolben-Brennkraftmaschine nach einem der vorhergehenden Ansprüche, wobei der Prallstift (12) in einem mittleren Bereich der Stiftstruktur (10) angeordnet ist.

10. Hubkolben-Brennkraftmaschine nach einem der vorhergehenden Ansprüche, wobei die Stiftstruktur (10) aus einem metallischen Werkstoff und/oder einem Keramikwerkstoff gebildet ist.

11. Hubkolben-Brennkraftmaschine nach einem der vorhergehenden Ansprüche, wobei die Stiftstruktur (10), wenn der Kolben sich in OT-Stellung befindet, im Verdichtungsraum des Brennraums (7a) und/oder in einem Bereich (7a) des Brennraums (7), in dem eine Verbrennung des komprimierten Luft-Brennstoffgemisches stattfindet, angeordnet ist.

12. Hubkolben-Brennkraftmaschine (1) nach einem der vorhergehenden Ansprüche, wobei die Hubkolben-Brennkraftmaschine eine mit gasförmigem oder mit flüssigem Kraftstoff, betriebene Hubkolbenbrennkraftmaschine ist.

13. Hubkolben-Brennkraftmaschine (1) nach einem der vorhergehenden Ansprüche, wobei die Hubkolben-Brennkraftmaschine ausgebildet ist, einen für einen Verbrennungsvorgang erforderlichen Brennstoff dem Brennraum unter Druck in lediglich einem Einspritzvorgang kurz vor oder bei Erreichung des oberen Totpunktes zuzuführen.

14. Hubkolben-Brennkraftmaschine (30) nach einem der Ansprüche 1 bis 12, wobei die Hubkolben-Brennkraftmaschine ausgebildet ist,

a) eine Teilmenge eines für einen Verbrennungsvorgang erforderlichen Brennstoffes dem Brennraum zur Bildung eines mageren, zündunfähigen Gemisches (8a) zuzuführen,
b) nachfolgend das magere, zündunfähige Gemisch (8a) durch eine Kolbenbewegung hin zum oberen Totpunkt zu komprimieren, und
c) nachfolgend eine Restmenge des für einen Verbrennungsvorgang erforderlichen Brennstoffes im Bereich des oberen Totpunkts, OT, zur Initiierung der Selbst- oder Fremdzündung zuzuführen.

15. Kraftfahrzeug, vorzugsweise Nutzfahrzeug, umfassend eine Hubkolben-Brennkraftmaschine (1, 30) nach einem der vorhergehenden Ansprüche.

**Claims**

1. A reciprocating-piston internal combustion engine (1; 30), comprising at least one cylinder (2),

in which a reciprocating piston (3) is disposed so as to be movable in a reciprocating manner, wherein a pin structure (10) is disposed in the combustion chamber in the region of the cylinder head (6) and/or of the piston crown (4),

**characterized in that,**

the reciprocating-piston internal combustion engine (1; 30) having a baffle pin (12) which for deflecting and/or distributing introduced fuel (8) toward the pin structure (10) is disposed in the region of the pin structure (10), wherein

the baffle pin with respect to an introduction direction of the fuel into the combustion chamber and the pin structure (10) is arranged and configured such that introduced fuel (8) at least largely impacts the baffle pin and by the latter is deflected and/or distributed in the radial direction toward the pin structure (10).

2. The reciprocating-piston internal combustion engine as claimed in claim 1, wherein the pin structure (10)

a) by way of the surface thereof is configured to develop a heat-storing and/or temperature-equalizing effect during combustion in the combustion chamber (7a); and/or
b) is a pin structure for homogenizing a mixture generation and/or a combustion in the combustion chamber (7a), or is a pin structure for promoting a more homogeneous mixture generation and/or combustion in the combustion chamber (7a).

3. The reciprocating-piston internal combustion engine as claimed in one of the preceding claims, wherein the pin structure (10) occupies a volumetric proportion in the range from 5% to 40%, furthermore preferably in the range from 10% to 20%, of the combustion chamber (7) when the reciprocating piston (3) is at the top dead center, TDC.

4. The reciprocating-piston internal combustion engine as claimed in one of the preceding claims, wherein the pin structure (10), disposed in the combustion chamber in the region of the piston crown (4), is disposed in a bowl (5) of the piston crown (4) and/or extends in the manner of stalagmites in the direction of the combustion chamber (7).

5. The reciprocating-piston internal combustion engine as claimed in one of the preceding claims, wherein the pin structure (10), disposed in the combustion chamber in the region of the cylinder head (6)

a) is disposed in the cylinder head (6), preferably in a recess of the cylinder head; and/or
b) is disposed below the cylinder head (6); and/or
c) from the cylinder head (6) extends in the manner of stalagtites in the direction of the combustion chamber (7).

6. The reciprocating-piston internal combustion engine as claimed in one of the preceding claims, wherein the pin structure (10) comprises a plurality of pins (11), and/or is configured by a plurality of pins (11).

7. The reciprocating-piston internal combustion engine as claimed in claim 6, wherein

a) the pin structure (10) comprises at least 10, furthermore preferably at least 20 or at least 30 pins (11); and/or
b) the plurality of pins (11) are disposed so as to be mutually spaced apart and/or so as not to be interconnected in the combustion chamber (7).

8. The reciprocating-piston internal combustion engine as claimed in one of claims 6 to 7, wherein

a) a length of the pins (11) is greater than the diameter of the latter; and/or
b) the pins (11) are embodied so as to be cylindrical and/or in the shape of studs; and/or
c) the pins (11) extend so as to be parallel or substantially parallel to the direction of movement (b) of the piston (3).

9. The reciprocating-piston internal combustion engine as claimed in one of the preceding claims, wherein the baffle pin (12) is disposed in a central region of the pin structure (10).

10. The reciprocating-piston internal combustion engine as claimed in one of the preceding claims, wherein the pin structure (10) is formed from a metallic material and/or a ceramic material.

11. The reciprocating-piston internal combustion engine as claimed in one of the preceding claims, wherein the pin structure (10), when the piston is at the TDC position, is disposed in the compression chamber of the combustion chamber (7a) and/or in a region (7a) of the combustion chamber (7) in which combustion of the compressed air/fuel mixture takes place.

12. The reciprocating-piston internal combustion engine (1) as claimed in one of the preceding claims, wherein the reciprocating-piston internal combustion engine is a reciprocating-piston internal combustion engine, which is operated using gaseous or liquid fuel.

13. The reciprocating-piston internal combustion engine (1) as claimed in one of the preceding claims, wherein the reciprocating-piston internal combustion engine is configured to supply to the combustion chamber a pressurized fuel required for a combustion procedure in only one injection procedure shortly before or when the top dead center is reached.

14. The reciprocating-piston internal combustion engine (30) as claimed in one of claims 1 to 12, wherein the reciprocating-piston internal combustion engine is configured

a) to supply to the combustion chamber a sub-quantity of a fuel required for a combustion procedure, for generating a lean, non-ignitable mixture (8a);
b) to subsequently compress the lean, non-ignitable mixture (8a) by a movement of the piston toward the top dead center; and
c) to subsequently supply a residual quantity of the fuel required for a combustion procedure in the region of the top dead center, TDC, for initiating the compressed ignition or the induced ignition.

15. A motor vehicle, preferably a commercial vehicle, comprising a reciprocating-piston internal combustion engine (1, 30) as claimed in one of the preceding claims.

**Revendications**

1. Moteur à combustion interne (1 ; 30) à piston alternatif, comprenant au moins un cylindre (2), dans lequel un piston alternatif (3) est agencé de manière à pouvoir effectuer un mouvement de va-et-vient,

une structure à tiges (10) étant agencée du côté de la chambre de combustion dans la zone de la culasse (6) et/ou de la tête de piston (4),
**caractérisé en ce que**
le moteur à combustion interne (1 ; 30) à piston alternatif présente une tige d'impact (12) agencée dans la zone de la structure à tiges (10) pour dévier et/ou pour répartir le carburant (3) introduit vers la structure à tiges (10), la tige d'impact étant agencée et conçue par rapport à une direction d'introduction du carburant dans la chambre de combustion et à la structure à tiges (10) de telle sorte que le carburant introduit (3) rebondit au moins de manière prédominante sur la tige d'impact (12) et est dévié et/ou réparti par celle-ci dans la direction radiale vers la structure à tiges (10).

2. Moteur à combustion interne à piston alternatif selon la revendication 1, dans lequel la structure à tiges (10)

a) est conçue de façon à exercer sur sa surface un effet d'accumulation de chaleur et/ou d'équilibrage de la température pendant une combustion dans la chambre de combustion (7a) ; et/ou
b) est une structure à tiges pour homogénéiser une formation de mélange et/ou une combustion dans la chambre de combustion (7a) ou est une structure à tiges pour favoriser une formation de mélange et/ou une combustion plus homogène dans la chambre de combustion (7a).

3. Moteur à combustion interne à piston alternatif selon l'une des revendications précédentes, dans lequel la structure à tiges (10) remplit une fraction de volume comprise entre 5 % et 40 %, de préférence entre 10 % et 20 %, de la chambre de combustion (7) lorsque le piston alternatif (3) se trouve au point mort haut, OT.

4. Moteur à combustion interne à piston alternatif selon l'une des revendications précédentes, dans lequel la structure à tiges (10) agencée du côté de la chambre de combustion dans la zone de la tête de piston (4) est agencée dans une cavité (5) de la tête de piston (4) et/ou s'étend en forme de stalagmite en direction de la chambre de combustion (7).

5. Moteur à combustion interne à piston alternatif selon l'une des revendications précédentes, dans lequel la structure à tiges (10) agencée côté chambre de combustion dans la zone de la culasse (6)

a) est agencée dans la culasse (6), de préférence dans un évidement de la culasse ; et/ou

b) est agencée en dessous de la culasse (6) ; et/ou

c) s'étend en forme de stalactite depuis la culasse (6) en direction de la chambre de combustion (7).

6. Moteur à combustion interne à piston alternatif selon l'une des revendications précédentes, dans lequel la structure à tiges (10) comprend une pluralité de tiges (11) et/ou est formée par une pluralité de tiges (11).

7. Moteur à combustion interne à piston alternatif selon la revendication 6, dans lequel

a) la structure à tiges (10) comprend au moins 10, de préférence au moins 20 ou au moins 30, tiges (11) ; et/ou

b) les tiges de la pluralité de tiges (11) sont espacées les unes des autres et/ou sont agencées dans la chambre de combustion (7) sans être reliées entre elles.

8. Moteur à combustion interne à piston alternatif selon l'une des revendications 6 à 7, dans lequel

a) une longueur des tiges (11) est supérieure à leur diamètre ; et/ou

b) les tiges (11) sont de forme cylindrique et/ou en forme de boulon ; et/ou

c) les tiges (11) s'étendent parallèlement ou sensiblement parallèlement à la direction de déplacement (b) du piston (3).

9. Moteur à combustion interne à piston alternatif selon l'une des revendications précédentes, dans lequel la tige d'impact (12) est agencée dans une zone centrale de la structure à tiges (10).

10. Moteur à combustion interne à piston alternatif selon l'une des revendications précédentes, la structure à tiges (10) étant formée d'un matériau métallique et/ou d'un matériau céramique.

11. Moteur à combustion interne à piston alternatif selon l'une des revendications précédentes, dans lequel la structure à tiges (10) est agencée, lorsque le piston se trouve en position OT, dans la chambre de compression de la chambre de combustion (7a) et/ou dans une zone (7a) de la chambre de combustion (7) dans laquelle a lieu une combustion du mélange air-carburant comprimé.

12. Moteur à combustion interne à piston alternatif (1) selon l'une des revendications précédentes, le moteur à combustion interne à piston alternatif étant un moteur à combustion interne à piston alternatif fonctionnant avec un carburant gazeux ou liquide.

13. Moteur à combustion interne à piston alternatif (1) selon l'une des revendications précédentes, le moteur à combustion interne à piston alternatif étant conçu de façon à fournir un carburant nécessaire à un processus de combustion dans la chambre de combustion sous pression en une seule opération d'injection peu avant le point mort haut ou lorsque ce point mort haut est atteint.

14. Moteur à combustion interne à piston alternatif (30) selon l'une des revendications 1 à 12, le moteur à combustion interne à piston alternatif étant conçu de façon à

a) fournir une quantité partielle d'un carburant nécessaire à un processus de combustion à la chambre de combustion de façon à former un mélange (8a) pauvre et non-inflammable,

b) comprimer ensuite le mélange pauvre et non-inflammable (3a) par un mouvement de piston vers le point mort haut, et

c) ajouter ensuite une quantité résiduelle de carburant nécessaire à un processus de combustion dans la zone du point mort haut, OT, pour initier l'auto-allumage ou l'allumage commandé.

15. Véhicule automobile, de préférence véhicule utilitaire, comprenant un moteur à combustion interne à piston alternatif (1, 30) selon l'une des revendications précédentes.

FIG. 1

FIG. 2

FIG. 3

FIG. 4

FIG. 5

30

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H084534 A
- US 20060081212 A1
- JP H0988609 A
- EP 0147149 A2
- GB 2254372 A
- FR 2291361 A1
- EP 3351779 A1
- DE 10135062 A1
- DE 19753407 A1

**In der Beschreibung aufgeführte Nicht-Patentliteratur**

- **VON ERICH HOEPKE ; STEFAN BREUER et al.** Nutzfahrzeugtechnik: Grundlagen, Systeme, Komponenten. *ATZ/MTZ-Fachbuch,* August 2012